# EUROPEAN PATENT APPLICATION

(11) **EP 1 762 773 A1**
(43) Date of publication of application: **14.03.2007**
(21) Application number: 05108314.5
(22) Date of filing: 09.09.2005
(51) Int. Cl.: F17C 1/16, B29C 70/08, B29C 70/32, B29C 70/48

(54) **Method for producing a pressure vessel and such vessel**

(71) Applicant: H.P.O. Helderse Project Ontwikkeling B.V., 1785 LX Den Helder (NL); TNO Bedrijven B.V., 2628 VK Delft (NL)
(72) Inventor: Veenendaal, Jan, 1788 AZ Den Helder (NL); Tromp, Elisabeth, 2613 DJ Delft (NL); Janssen, Robert Joost, 2613 DP Delft (NL)
(74) Representative: Metman, Karel Johannes

(57) **Abstract**

The invention relates to a method of producing a vessel (1) for containing a fluid under high pressure, comprising the steps of providing a fluidtight substantially closed liner (2), providing a high-strength non-impregnated fibre, winding the fibre around the liner (2) in a dry condition in order to form a fibre reinforcement (10) around the liner (2), and finishing the vessel (1).

## Description

The invention relates to a method of producing a pressure vessel for containing a fluid under high pressure.

Pressure vessels for containing a fluid under high pressure are known in the art, particularly as storage tanks of compressed natural gas in vehicles. These vessels are often made of steel. As it is desired to increase the fluid capacity of a vessel a higher maximum allowable pressure is required. A vessel which is suitable for higher pressure must have a higher strength which generally leads to a heavier vessel. In order to overcome this disadvantage it has been proposed in the prior art to use light vessels made of a metal liner, reinforced preferably with fibres impregnated with resin. A drawback of this type of vessels is that the method of production of the vessels is slow; besides, their weight is still relatively high.

It is an object of the present invention to simplify and accelerate the method of producing fibre-reinforced pressure vessels and reduce their weight.

In order to achieve this object the invention provides a method comprising the steps of providing a fluid-tight substantially closed liner, providing a high-strength non-impregnated fibre, winding the fibre around the liner in a dry condition in order to form a fibre reinforcement around the liner, and finishing the vessel.

The advantage of this method is that the vessel is produced by providing and winding non-impregnated fibres, which allows higher winding speeds thereby reducing production time. Furthermore, the vessel weight will be reduced, which is particularly relevant when used in vehicles.

It has surprisingly been found that impregnation of the fibre with a resin is not necessary to achieve the desired features of the vessel, neither during winding nor in use. Nonetheless, it is possible that the step of finishing the vessel includes the step of impregnating or covering the fibre reinforcement by a resin or other suitable material, for example a protective layer, if this is desired or required in a particular case. This means that impregnation of the fibre reinforcement is performed after winding the fibre around the liner. This has the advantage that impregnating can be done batchwise which is faster than impregnating the fibre before winding it.

A further preferable finishing step includes the step of assembling additional components for safety and refilling to the vessel.

The invention also relates to a vessel for containing a fluid under high pressure, comprising a fluid-tight substantially closed liner and a high-strength fibre which is wound around the liner so as to form a fibre reinforcement around the liner wherein the fibre is a non-impregnated fibre. The advantage of this pressure vessel is that it can be produced at reduced costs and has a lower weight, without reducing its strength.

The invention will hereafter be elucidated with reference to the accompanying drawings.
Fig. 1 is a side view and a partly cut away of an embodiment of a vessel which is produced by the method according to the invention.
Fig. 2 is an enlarged cross-sectional view taken along line II-II in Fig. 1.

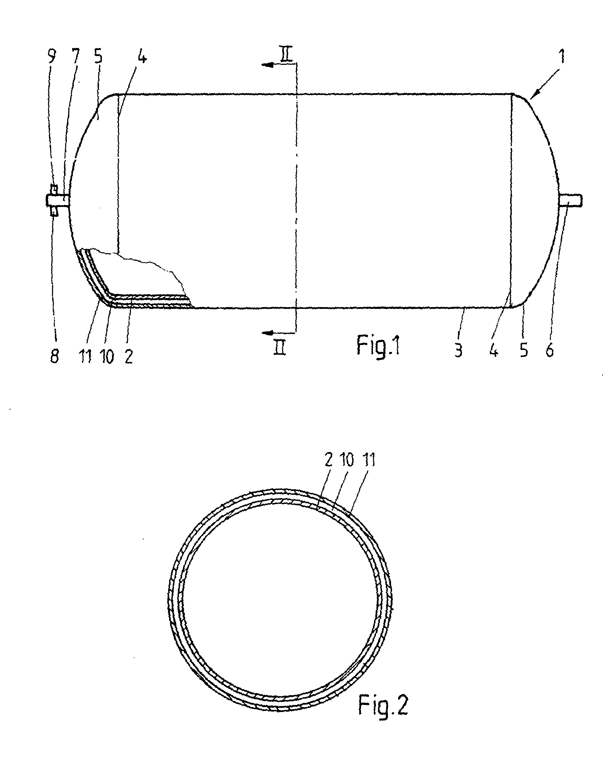

Fig. 1 shows a sketch of an embodiment of a vessel 1 which is produced by the method according to the invention. The vessel 1 can be used for storage of fluids under high pressure, such as natural gas, and mounted to a vehicle, for example. The vessel 1 comprises a fluid-tight substantially closed liner 2. The embodiment shown in Fig. 1 can be made of a cylindrical portion 3 with two end parts 4, which cylindrical portion 3 can be sawn from a tube, and two covers 5 welded to the end parts 4 of the cylindrical portion 3.

The vessel 1 is provided with tubes for communicating with the outside, such as a refill tube 6 and a delivery tube 7 so as to supply the fluid to the user, and with additional devices, such as a pressure sensor 8 and a pressure relief valve 9 for safety. The relief valve 9 opens when the pressure in the vessel exceeds a predefined threshold value. The tubes 6 to 9 are preferably located in the centre of the covers 5 before winding the fibre around the liner.

Fig. 2 shows a cross section of the vessel 1. The liner 2 is enclosed by a reinforcement of high-strength non-impregnated wound fibre 10. The fibre is preferably isotensoidal wound in substantially dry condition around the liner 2 according to the netting theory. Information regarding the netting theory can be found in a report of the Technical University of Delft, the Netherlands, report VTH-166. The reinforcement of wound fibre 10 may be enclosed by an impregnation material 11 such as a resin. The impregnating is done by vacuum infusion or resin transfer moulding. In these production processes the resin is pressed into the fibre by a pressure difference between the resin and the fibre.

In general it is noted that, in this application, the expression "comprising" does not exclude other steps, and "a" or "an" does not exclude a plurality. Reference signs in the claims shall not be construed as limiting the scope thereof.

## Claims

1. A method of producing a vessel (1) for containing a fluid under high pressure, comprising the steps of:
providing a fluid-tight substantially closed liner (2) providing a high-strength non-impregnated fibre
winding the fibre around the liner in a dry condition in order to form a fibre reinforcement (10) around the liner (2); and
finishing the vessel (1).

2. The method of claim 1, wherein the step of finishing the vessel (1) includes the step of impregnating the fibre reinforcement (10) on the vessel (1) by a resin or other suitable material.

3. The method of claim 1 or 2, wherein the step of impregnating the fibre reinforcement (10) is done by vacuum infusion or resin transfer moulding.

4. The method of any one of the preceding claims, wherein the fibre is wound according to the "netting" theory creating a substantially isotensoid wound fibre.

5. The method according to one of the preceding claims, wherein the step of finishing the vessel (1) includes the step of assembling additional components for safety (8, 9) and refilling (6) to the vessel.

6. A vessel for containing a fluid under high pressure, comprising a fluid-tight substantially closed liner (2) and a high-strength fibre which is wound around the liner (2) so as to form a fibre reinforcement (10) around the liner (2), **characterized in that** the fibre is a non-impregnated fibre.
